# EUROPEAN PATENT APPLICATION

(11) **EP 2 335 818 A1**
(43) Date of publication of application: **22.06.2011**
(21) Application number: 09165087.9
(22) Date of filing: 09.07.2009
(51) Int. Cl.: B01J 13/18, B65D 83/14, C08G 18/00

(54) **Leach-proof microcapsules, the method for preparation and use of leach-proof microcapsules**

(71) Applicant: Altachem Holdings NV, 9800 Deinze (BE)
(72) Inventor: De Schrijver, Aster, 9831 Deurle (BE)
(74) Representative: BiiP cvba

(57) **Abstract**

The present invention is directed to a microcapsule comprising a partially alkylated capsule wall, **characterized in that** the alkylation of said wall is comprised between 2 and 25%. The present invention is further directed to a process for preparing a substantially leach-proof microcapsule and their use in active-catalyzed polymerization reactions to form sealants, foams, coatings or adhesives.

The present invention also provides a foam composition comprising said microcapsules and a pressurized can containing said foam composition. The invention is also directed to a release mechanism for releasing the substantially leach-proof capsules.

## Description

### FIELD OF THE INVENTION

The present invention relates to leach-proof capsules and microcapsules containing active molecules under pressure, the preparation process and use thereof in active-catalyzed reactions.

### BACKGROUND OF THE INVENTION

Pressurized fluids stored in containers (cans or vessels) are used in a wide field of applications. Sprayable foams are used for several industrial applications as well as by hobbyists. At present, existing sprayable foam formulations are one and two component PU foams (OCF = One Component Foams; TCF = Two Component Foams) in aerosol cans and/or pressure vessels. One well known example of sprayable foam is polyurethane foam. Spray polyurethane foams (SPF) are of particular applicative interest as SPF insulation is rigid, lightweight, flexible, wind resistant, and effective in extreme temperatures and weather conditions.

In two component foams (TCF), both a polyol/additive/blowing agent and a NCO/additive/blowing agent mixture are made in separate cans. Both mixtures are blended upon spraying. The extremely reactive reactants can already react in the dispenser channel that thereby gets clogged and must be replaced after each use. A solution has been provided by the One Component Foams.

Micro-encapsulation is used to process the OCF. Tiny particles or droplets containing the core material are surrounded by a coating or shell. Through micro-encapsulation, the core is isolated from its surroundings and/or chemical attack and evaporation of the volatile core is retarded. Micro-encapsulation can also be used to control the rate at which the core material leaves the microcapsule.

Clearly, the 'one-component' approach using the micro-encapsulation of initiators, catalysts and crosslinkers is interesting as it avoids the need for mixing of the reactive components in the dispenser channel upon spraying. The catalysts and the non-cured oligomers or polymers could be safely mixed in the can using the micro-encapsulation process. The reactive components will only react upon dispensing and hence, clogging of the dispenser channel is avoided.

Effective molecular confinement may avoid the need for separation in two or more of vessels of mutually incompatible (highly reactive) reactants, with considerable economic savings and comparable enhancement in ease of use and versatility.

Previous technologies commonly used for the encapsulation and fast delivery of active ingredients induced by mechanical forces make use of organic polymers as embedding materials. For example, patent US3839220 describes encapsulation methods such as the simple and complex coacervation processes, the interfacial polycondensation and the organic phase separation methods, the exchange process and the meltable dispersion process.

US3839220 describes a system for storing active materials comprising a container, a fluid pressurizing medium in said container, and a multiplicity of microcapsules in said container, each of said microcapsules containing a charge consisting essentially of said bursting fluid being present in an amount, and having a vapor pressure such that the pressure inside said microcapsules is not substantially different from the pressure of the fluid medium in said container, but is sufficiently higher than the prevailing outside pressure to cause bursting of said capsules upon their removal from said container.

US'220 describes that virtually any kind of compound can be encapsulated in any of a number of encapsulating media, by one or more encapsulating processes. However, a common feature to organic polymers used to capsulate matrices is their low chemical and physical stability which prevents practical applications where long-term stability is a crucial requirement.

A potential alternative to the approach described in US3839220 is based on the sol-gel micro-encapsulation technology described in US6303149. This technology uses inorganic silica to form a silica shell around entrapped actives. The microcapsules are normally formed by creating an oil-in-water emulsion made of the silica sol-gel precursors containing the dissolved active substances, and then mixing said emulsion with an aqueous solution at a suitably selected pH to obtain loaded sol-gel microcapsules in suspension. The method affords 0,01-100µ sol-gel microcapsules loaded with up to 95% functional molecules.

US7258874 and US6303149 also disclose sol-gel microcapsules and methods for their preparation and use in controlled release applications. Further, US7258874 in particular describes the preparation of ceramic particles having an active material homogeneously dispersed throughout the particles, wherein the active material is capable of being released from said particles, and the active material in said particles is protected from degradation until release of the active material from the particles.

As mentioned in the patents described above, the sol-gel encapsulation technique offers the advantage of controlled release of the capsule content. Sol-gel micro-encapsulation further offers the advantage of control of the capsule size and structure as well as properties such as porosity.

The production of leach-proof capsules constitutes the fundamental requirement for any application of sol-gel entrapped materials to heterogeneous catalysis. US7258874 demonstrates that the release decreases significantly with the addition of methyltrimethoxysilane (MTMS). However, leaching still occurs and may form a serious disadvantage for the shelf-life of the OCF.

The aim of a microencapsulation application is the total isolation of the core content from its environment. Organically modified alkoxides (ORMOSIL), such as trimethoxy silane (TMOS) and methyltrimethoxysilane (MTMS) have been suggested to be very good solvents for numerous molecules. The solubility is used to load the dissolved molecules or substances in the hydrolysis-condensation polymer of the monomer solvent. US6303149 for example describes the mixing of silicon alkoxides with silicon esters containing a non-hydrolyzable monomer, such as tri- or di-alkoxysilanes.

At present, no solution has been provided to produce entirely leach-proof capsules suspended in a solvent system containing highly reactive molecules. In the prior art described above, the release of the microcapsule content is not controlled to the moment of dispensing. Leaching of the content from the microcapsules inside the container still occurs and early reaction mechanisms may be catalyzed. As the shelf-life of the foam is hereby decreased, this unwanted process of early release of microcapsule content is to be avoided.

Given the above drawbacks of existing sol-gel microcapsules, it is a main object of the present invention to provide optimized capsules and microcapsules with respect to avoiding undesired and early catalytic reactions. The present invention is a key finding to underpin these developments.

It is a particular object of the invention to provide substantially leach-proof capsules and microcapsules which increase the shelf-life of the product formulated with said capsule. The use of leach-proof capsules of the present invention, avoids the highly reactive molecules to slowly disperse through the capsule wall and react with the catalyst before being exposed to a pressure drop, hence, substantially increasing the shelf-life of the product.

It is a further object of the present invention to provide a release mechanism for the leach-proof capsules. Typically, the dispersion of the highly reactive molecules should only occur upon dispensing. In accordance with the present invention, the capsules are leach-proof, evaporation of the volatile core is thereby avoided. The microcapsule shell will burst upon exposure to atmospheric pressure. Hence, no clogging through early catalysation reactions occurs with the capsules of the present invention.

The present invention meets the above objects by providing substantially leach-proof hybrid organic-inorganic oxide microcapsules in accordance with the present invention.

### SUMMARY OF THE INVENTION

The present invention is directed to a microcapsule comprising a partially alkylated capsule wall, **characterized in that** the alkylation of said wall is comprised between 2 and 25%.

The present invention is further directed to a process for preparing a substantially leach-proof microcapsule. The present invention also provides a foam composition comprising said microcapsules and a pressurized can containing said foam composition.

The invention is also directed to a release mechanism for releasing the substantially leach-proof capsules.

### DESCRIPTION OF THE INVENTION

The present invention is directed to substantially leach-proof capsules and microcapsules containing a polymerization catalyst encapsulated inside a core-shell geometry, preferably produced using sol-gel technology, which can be released by rupture of the shell following a pressure drop. Conceptually, the rupture could be achieved by either co-encapsulating a pressurized liquid or a low boiling liquid which will lead to rupture of the shell during depressurization.

The key technological challenge is to design a shell, totally impermeable, strong enough to handle the various processes for the production of the cans and temperature gradient during storage but which can break upon a relatively modest pressure drop of 5 to 1 bar.

The influence of the alkyl-alkoxide residues in the catalytic behaviour of ORMOSIL (organically modified silicates) is crucial. Scientific testing performed by DRIFT spectral analysis allows concluding that along with TMOS the presence of the co-precursor MTMS (methyltrimethoxysilane) affects the structure and the hydrophilic/lipophilic balance (HLB) of the sol-gel material. However, its content does not affect appreciably the material's hydrophilicity. Namely, a modification with 25%, preferably 20% and more preferably 10% of MTMS imparts a significant decrease in the material's hydrophilicity as well in the porosity and surface area without major structural changes in the molecular silica network.

According to the present invention, it has surprisingly been found that minor alkylation of the silica shell, preferably between 2 and 25%, may be enough to ensure concomitant high affinity between the structure of the sol-gel organosilica matrix and that of the small polar molecules used as polymerization catalysts, as well as the required minimal, more preferably avoided diffusability of the confined active into the lipophilic external environment of solvent system typically employed in spray polyurethane foam formulations. Modest alkylation is thus enough to prevent leaching of the active material from the microcapsule.

The permeability of microcapsule membrane is one of the important characteristics to specify the function of microcapsule for sustained release of encapsulated matter. The permeation of matter through the microcapsule membrane to the surrounding medium in the container clearly needs to be avoided to prevent the highly reactive material to be engaged in an early catalysation reaction in the container before dispersion. The permeation of matter through membrane is mainly caused by the dispersion of the solute molecules through the pores of membrane and the diffusion phenomena of molecules passing between the polymolecules of the membrane.

The microcapsules, preferably sol-gel microcapsules according to the present invention have been suggested to prevent leaching of the encapsulated payload. A typical 2 and 25% degree of alkylation of the silica matrix, preferably between 2 and 20%, more preferably 2 and 10%, may ensure the formation of substantially leach-proof particles. It is thus possible to mix the entrapped catalyst with the reactants in a single vessel. The leach-proof nature of the microcapsule is due to the organic modification of the silica network through the employment of alkyl-modified silicon co-precursors in the sol-gel process. Modest alkylation, preferably 2 to 25%, more preferably 2 to 20% and even more preferably 2 to 10% in molar terms, is enough to ensure full retention of the entrapped active in the presence of a lipophilic solvent.

In a preferred embodiment, the microcapsule is an organosilica capsule and has a metal based shell. More preferably, the shell is processed from a silicon source. The expression "silicon source" as used herein, refers to a compound of formula R4-xSi(L)x wherein R is an alkyl, an aryl or an alkyl-aryl such as a benzyl, L is independently CI, Br, I or OR' wherein R' is an alkyl or benzyl and x is an integer of 1 to 3. The "silicon source" is selected so as to be able to form a network of Si-O-Si bonds. Organosilica bonds have the capability to act as bonding intermediates and to form polymers with useful properties such as impermeability to water, flexibility and resistance to chemical attack.

In a preferred embodiment, the hydrophilic/lipophilic balance (HLB) of the microcapsules as defined in Fidalgo et al. Chem. Mater. 17 (2005) 6686 is maximum 0.1. MTMS content does not affect appreciably the catalyst hydrophilicity, however, it is responsible for a gradual lipophilicity increase, and therefore for a decrease in the HLB, and for striking structural changes in the silica network.

The capsule preferably contains active material under pressure. More preferably, at least one catalyst is entrapped in the microcapsule. Typically, the catalyst or active material is a compound poorly soluble in water, such as benzoyl peroxide (BPO).

The present invention further discloses a process for preparing a microcapsule. The process for preparing a microcapsule according the invention comprises the steps of dissolving the active molecules into a solution, preferably in a semi-metal or metal source, and more preferably under pressure, the step of emulsifying said solution, preferably with water or with another hydrolytic solvent, the step of treating said emulsion with a condensation catalyst, and the step of dispersing the resulting loaded capsules in a mixture of monomers/oligomers within a pressurized vessel. The microcapsule preferably is a sol-gel capsule. The active material or catalyst is mixed with a mixture of alkoxide and alkoxi-silane with or without a solvent. This organic phase or oil is emulsified in an appropriate aqueous or water phase using an appropriate surfactant. This results in the formation of capsules with an impermeable shell containing, in their core, the catalyst, which may be dissolved in a co-solvent. Alternatively, the catalyst is not dissolved in a co-solvent. Preferably, the microcapsules are loaded with at least 95% wt. of functional molecules.

Preferably, preparation of the microcapsule is performed under pressure. The capsules can be introduced in the can with a pressurized liquid or carrier, such as LPG (liquefied petroleum gas). Entrapment of BPO may occur. At least part of the overall content goes inside the forming microcapsules exactly because the incipient microparticles are highly lipophilic, even at 25%, at 20% and even more at 10% methylation degree.

The capsules containing the active catalyst and a liquefied gas such as LPG are then transported under pressure in a pressurized vessel containing also the monomers. During spraying, a relatively modest pressure drop (preferably 5 to 1 bar) is sufficient to lead to a rupture of the shell, which results in instant release of the catalyst and polymerization of the monomer into a foam.

Concerning the actual entrapment of BPO, at least part of the overall content may enter the forming microcapsule exactly because such incipient microparticles are highly lipophilic at 25%, at 20% and also at 10% methylation degree.

In another preferred embodiment, microencapsulation is carried out in a low boiling solvent. The leaded capsules are dispersed in a solvent such as LPG containing the monomers in a pressurized vessel. The preparation of microcapsules according to this embodiment is conducted at low temperature whereby the volatility is reduced. The process is conducted under refrigeration and the temperature is precisely controlled until the particles have been loaded in the pressurized cans. The thermal expansion coefficient of the liquid, the mechanical property of the shell and the pressure inside the can are carefully adjusted to avoid rupture of the capsule prior to spraying. Upon dispensing at ambient pressure the vessel's content containing the pressurized capsules, the capsules burst due to the fast evaporation of the low boiling solvent and release their content which induces polymerization of the monomers.

Even when the aim of a microencapsulation application is the isolation of the core from its surrounding, the wall must be ruptured at the time of use. Many walls are ruptured easily by pressure or shear stress. In other systems, the wall is broken by solvent action, enzyme attack, chemical reaction, hydrolysis, or slow disintegration.

In a preferred embodiment, the force activating the release mechanism for the leach-proof capsules is a modest pressure drop, preferably 5 to 1 bar, acting upon dispensing the product at ambient pressure that breaks the capsule shell causing release of the entrapped active.

The present invention also provides a foam composition comprising said microcapsules and a pressurized can containing said foam composition.

According to the present invention, an active-containing leach-proof organosilica microcapsule containing loaded actives under pressure is provided.

Most application of sol-gel entrapped materials to heterogeneous catalysis fail because the materials are not leach-proof. Inside the vessel containing extremely reactive molecules such as those used for polyurethane foam formation, even a 1 % leaching of the entrapped catalyst would be enough to catalyze the polymerization reaction; and thus prevent industrial application of the sought 'one-component polyurethane foam pressure vessel' solution for the market.

Hence, there is a need for entirely leach-proof materials whose entrapped reactive species become accessible to external reactants under certain conditions. A specific solution must be found to a specific catalytic application, according to the present invention.

According to the present invention, it has been found that minor alkylation of the silica shell, preferably between 2 and 25% may be enough to ensure concomitant high affinity between the structure of the organosilica matrix and that of the small polar molecules used as polymerization catalysts, as well as the required minimal, more preferably avoided diffusability of the confined active into the lipophilic external environment of solvent system typically employed in spray polyurethane foam formulations. Modest alkylation is thus enough to prevent leaching of the active material from the microcapsule.

In a preferred embodiment, the microcapsule is an organosilica capsule and has a metal based shell. Preferably the metal based microcapsule shell comprises at least one monomer selected from metal alkoxides, semi-metal alkoxides, metal esters, semi-metal esters and from monomers of the formula M(R)n (P)m, wherein M is a metallic or semi metallic element, R is a hydrolyzable substituent, n is an integer from 2 to 6, P is a non polymerizable substituent and m is and integer from 0 to 6. More preferably, the shell is processed from a silicon source. The expression "silicon source" as used herein, refers to a compound of formula R4-xSi(L)x wherein R is an alkyl, an aryl or an alkyl-aryl such as a benzyl, L is independently CI, Br, I or OR' wherein R' is an alkyl or benzyl and x is an integer of 1 to 3. The "silicon source" is selected so as to be able to form a network of Si-O-Si bonds. Organosilica bonds have the capability to act as bonding intermediates and to form polymers with useful properties such as impermeability to water, flexibility and resistance to chemical attack.

In one preferred embodiment, the "silicon source" is a silicon alkoxyde such as monoalkyl-trialkoxy silane, or a dialkyl-dialkoxy silane. In a further preferred embodiment, the silicon alkoxyde is a mixture of monoalkyl-trialkoxy silane, and dialkyl-dialkoxy silane. In another preferred embodiment, the mixture of monoalkyl-trialkoxy silane and dialkyl-dialkoxy silane is further comprising trialkyl-alkoxy silane and/ or tetraalkoxy silane. In alternative embodiments provided, the alkyl and alkoxy residue of the silicon alkoxyde are independently linear or branched and comprising at least 1 carbon atom, preferably 1 to 6 carbon, more preferably 1 to 3 carbon atoms and and even more preferably 1 carbon atom. In one embodiment, the silicon alkoxyde is methyltrimethoxy silane.

In a preferred embodiment, the hydrophilic/lipophilic balance (HLB) of the microcapsules is maximum 0.1. MTMS content does not affect appreciably the catalyst hydrophilicity, however, it is responsible for a gradual lipophilicity increase, and therefore for a decrease in the HLB, and for striking structural changes in the silica network.

The capsule preferably contains active material under pressure. More preferably, at least one catalyst is entrapped in the microcapsule. Typically, the catalyst or active material is a compound poorly soluble in water, such as BPO.

In a preferred embodiment of the present invention, under appropriate choice of the reaction conditions, said product is in the form of a suspension containing about 1 to 60% solids consisting of sphere particles of 0.1-10 micrometer. The physical form of the product particles can be controlled, affording capsules and microcapsules of sol-gel derived material containing the loaded molecule with spherical shape. The capsules and microcapsules obtained by this process may accordingly be easily incorporated in various carriers such as sprays.

In a preferred embodiment according to the present invention, the present invention relates to the use of a substantially leach-proof active-containing organosilica microcapsule to form preferably adhesives, sealants and foams.

The present invention further discloses a process for preparing a microcapsule, preferably by sol-gel micro-encapsulation. In one aspect, it is provided an active-containing leach-proof organosilica microcapsule containing loaded actives under pressure. In a further aspect, there is also provided a process for preparing such microcapsule in a pressurized environment comprising: i) creating an oil-in-water emulsion by emulsification of a water insoluble solution comprising the precursors as a silicon source and the molecules to be loaded with an hydrolytic solvent; ii) mixing and stirring said emulsion with an aqueous solution at a selected pH to obtain loaded microparticles of 0.01-100 micrometer; and iii) the resulting particles are isolated and rinsed under pressure through cycles of filtration and re-suspension in deionized water or by any other means known in the art.

The active material or catalyst is mixed with a mixture of alkoxide and alkoxi-silane with or without a solvent. This organic phase or oil is emulsified in an appropriate aqueous or water phase using an appropriate surfactant. This results in the formation of capsules with an impermeable shell containing, in their core, the catalyst, which may be dissolved in a co-solvent. Alternatively, the catalyst is not dissolved in a co-solvent. Preferably, the sol-gel capsules are loaded with at least 95% wt. of functional molecules.

In one aspect, the sol-gel precursors can be metal or semi-metal alkoxide monomers, or a partially hydrolyzed and partially condensed polymer thereof, or a mixture thereof. The functional molecules and substances can be initiators, catalysts or cocatalysts that can be used in inducing the polymerization reaction. The functional molecules are either dissolved in the metal and semi-metal alkoxide monomers such as tetramethoxy silane (TMOS), tetraethoxy silane (TEOS), methyl trimethoxy silane (MTMOS), which are known to be very good solvents for numerous molecules and substances, or even suspended in the sol-gel precursors. High loading of active ingredients, up to 95% (w/w), are easily obtainable.

Preferably, preparation of the microcapsule is performed under pressure. The capsules can be introduced in the can with a pressurized liquid or carrier, such as LPG (liquefied petroleum gas). Entrapment of BPO may occur. At least part of the overall content goes inside the forming microcapsules exactly because the incipient microparticles are highly lipophilic at 25% at 20%, and at 2 to 10% methylation degree.

The capsules containing the active catalyst and a liquefied gas such as LPG are then transported under pressure in a pressurized vessel containing also the monomers. During spraying, a relatively modest pressure drop (preferably 5 to 1 bar) is sufficient to lead to a rupture of the shell, which results in instant release of the catalyst and polymerization of the monomer into a foam.

When BPO is entrapped, at least part of the overall content may go inside the forming microcapsule because such incipient microparticle is highly lipophilic, even at 2 to 10% methylation degree.

In another preferred embodiment, microencapsulation is carried out in a low boiling solvent. The leaded capsules are dispersed in a solvent such as LPG containing the monomers in a pressurized vessel. The preparation of microcapsules according to this embodiment is conducted at low temperature whereby the volatility is reduced. The process is conducted under refrigeration and the temperature is precisely controlled until the particles have been loaded in the pressurized cans. The thermal expansion coefficient of the liquid, the mechanical property of the shell and the pressure inside the can are carefully adjusted to avoid rupture of the capsule prior to spraying. Upon dispensing at ambient pressure the vessel's content containing the pressurized capsules, the capsules burst due to the fast evaporation of the low boiling solvent and release their content which induces polymerization of the monomers.

The hydrolytic solvent for use in the present disclosure is a solvent or a mixture of solvents favouring formation of -Si-O-Si- bonds from hydrolysis of the silicon source. Examples of such a solvent include aqueous solvents, such as a mixture of water and an inorganic acid such as HCl, H3PO4, H2SO4, HN03. When an acid such as HCl is used, from about 10-4 to about 10-2 mole equivalents of H+ can be used (based on the molar amount of the silicon alkoxyde).

In one aspect, it is provided a method for catalyzing a reaction selected from all sort of polymerization reactions, comprising an active-containing organosilica microcapsule, in which one or more reactants entering into said catalytic reaction and whereby said reaction comprising break up of the active-containing organosilica microcapsule and fast release of its content, allowing a product resulting from said catalytic reaction.

Condensation catalysts are know in the art and can be for example NaOH, HCl, KOH, NH40H, Ca(OH)2, NaF, KF, TBAF, TBAOH, TMAOH. Typically about 0.01 to about 0.09 mole equivalents of the condensation catalyst, such as NaOH, can be used (based on the molar amount of the silicon alkoxyde).
In a preferred embodiment, it is provided a BPO-containing organosilica micro-capsule.

In one embodiment, it is provided a process for preparing a organosilica microcapsule containing a catalyst under pressure, comprising i) mixing a silicon source with an hydrolytic solvent in a pressurized environment; ii) adding the catalyst; iii) treating the mixture of step ii) with a condensation catalyst and iv) mix the resulting microcapsules with a solution of monomer/oligomers also kept under pressure.

In a preferred embodiment, the present invention relates to the use of an active-containing organosilica micro-capsule (such as BPO-containing organosilica catalyst) to conduct a catalytic polymerization reaction such as to create a foam, an adhesive or a sealant.

In a preferred embodiment, the force activating the release mechanism for the leach-proof capsules is a modest pressure drop, preferably 5 to 1 bar, acting upon dispensing the product at ambient pressure that breaks the capsule shell causing release of the entrapped active. Preferably, the release mechanism according to the present invention may be used in coatings, adhesives, sealants and/or foams.

The present invention also provides a foam composition comprising said microcapsules and a pressurized can containing said foam composition. Various initiators, catalysts, and crosslinkers are commercially used to polymerize different unsaturated oligomers and various isocyanate and novel non-isocyanate monomers to form polyurethane polymers, used as adhesives, sealants and foams.

### BRIEF DESCRIPTION OF DRAWINGS

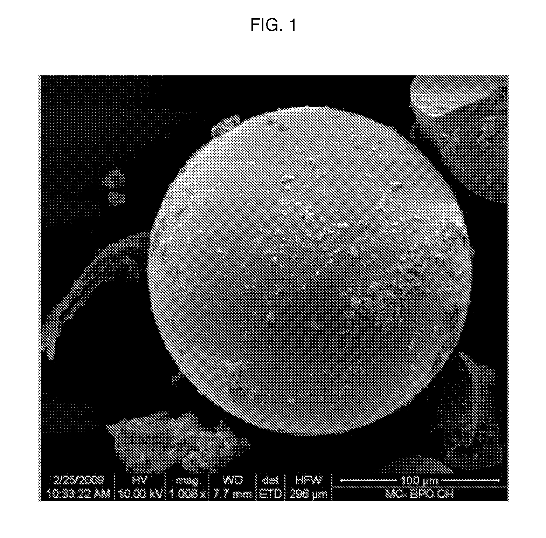

Fig. 1 represents a SEM image of MeTMS/TMOS microcapsules in cyclohexane.

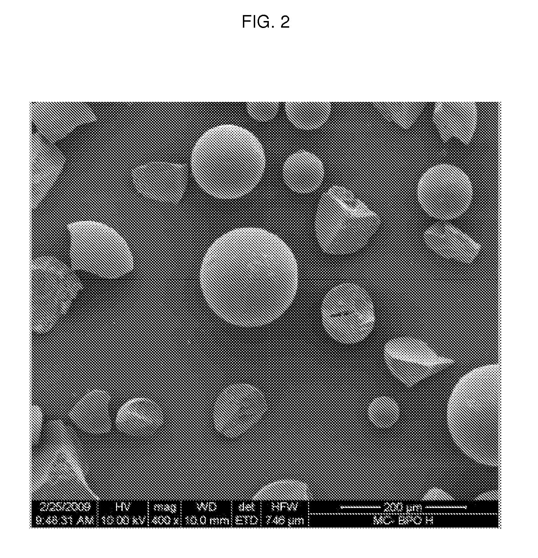

Fig. 2 represents a SEM image of MeTMS/TMOS microcapsules in hexane.

### EXAMPLES

The following examples clarify and demonstrate the present invention. They are not under any circumstances exclusive and do not intend to limit the scope of the present invention.

### EXAMPLE 1: BPO in MeTMS/TMOS organosilica

50 mg of Luperox A70S (70% powder BPO w/w in water) was mixed with 3.5 mL TMOS, 350 µL MeTMS, 500 µL MeOH and 3.5 mL H2O. The resulting mixture was left to age for one day at ambient temperature under stirring at 500 rpm for 24 h. Span 85 (2.49 g) was dissolved in cyclohexane (50 mL) and homogenised using a high speed blender (6500 rpm for 60 s) to form a clear surfactant solution. A 800 µL aliquot of the sol-gel solution was then added to the surfactant solution and the resulting emulsion was stirred at 500 rpm for 2h. A suspension of microspheres formed, which were separated from the process liquor by filtration and washed three times with cyclohexane to remove the surfactant. The resulting microspheres were then dried at room temperature for 1 day, before further drying at 50°C for 3 days.

The loaded microcapsules described in example 1 were used to check for leaching by leaving the capsules in contact with LPG for a month in a pressurized can and analyzing the liquid mixture for BPO periodically. No BPO was detected in samples withdrawn from the supernatant liquid even after one month.

Once ensured the absence of leaching from the loaded microcapsules described in example 1, the microcapsules were used to induce foam formation reactions in accordance with the following experimental conditions:

200 mg of loaded microcapsules kept under said pressurized atmosphere were transferred under pressure into a can pressurized at 7 bar containing a mixture of Diphenylmethane diisocyanate (1 g), Polyol 3, and silicone surfactant polyether siloxane B (100 mg) dissolved in LPG (40 mL). Spraying the resulting mixture resulted in foam formation due to the reduction in external pressure at atmospheric value with the capsules breaking and releasing the free radical initiator BPO close to the diffunding monomer/oligomers. Modest alkylation, such as alkylation of 25%, preferably 20% and more preferably 10% is thus enough to prevent leaching of the active material from the microcapsule.

A person skilled in the art will understand that the examples described above are merely illustrative in accordance with the present invention and not limiting the intended scope of the invention. Other applications of the present invention may also be considered.

## Claims

1. A microcapsule comprising a partially alkylated capsule wall, **characterized in that** the alkylation of said wall is comprised between 2 and 25%.

2. The microcapsule according to claim 1, whereby the alkylation of said wall is comprised between 2 and 20%.

3. The microcapsule according to claim 1, whereby the capsule is formed by sol-gel micro-encapsulation.

4. A microcapsule according to claim 1, **characterized in that** said capsule comprises a metal (Si) based shell.

5. A microcapsule according to claim 1, **characterized in that** said capsule wall has a hydrophilic-lipophilic balance of maximum 0.1.

6. A microcapsule according to claim 1, **characterized in that** said capsule comprises active molecules entrapped under pressure.

7. A microcapsule according to claim 1, **characterized in that** said capsule comprises at least one catalyst for use in active-catalyzed reactions.

8. A microcapsule according to claim 1, **characterized in that** the capsules comprises at least 95% wt of active molecules.

9. A process for preparing a microcapsule according to claim 1, comprising the steps of:
a) dissolving the active molecules into a solution;
b) emulsify said solution;
c) treating the emulsion of step b) with a condensation catalyst; and
d) disperse the resulting loaded capsules in a mixture of monomers/oligomers within a pressurized vessel.

10. The process according to claim 9, whereby the microcapsule is prepared under pressure and/or in a low boiling solvent.

11. A process according to claim 10, whereby said low boiling solvent is preferably liquefied petroleum gas (LPG).

12. A foam composition comprising microcapsules according to claim 1.

13. A pressurized can comprising a foam composition according to claim 12.

14. A release mechanism whereby the capsule walls of a microcapsule according to claim 1 bursts by submission to a pressure drop, whereby the released active molecules take part in a catalytic reaction.

15. The release mechanism according to claim 14, whereby said catalytic reaction is a polymerization reaction.
